# EUROPÄISCHE PATENTSCHRIFT

(11) **EP 3 689 216 B1**
(45) Veröffentlichungstag und Bekanntmachung des Hinweises auf die Patenterteilung: **05.10.2022**
(21) Anmeldenummer: 20153601.8
(22) Anmeldetag: 24.01.2020
(51) Int. Cl.: A47L 15/00, A47L 15/42, B01D 61/12, C02F 1/44, B01D 61/02

(54) **SPÜLMASCHINE UND VERFAHREN ZUR FEHLERÜBERWACHUNG EINER UMKEHROSMOSEEINHEIT EINER SPÜLMASCHINE**
DISHWASHER AND METHOD FOR MONITORING FAULTS IN A REVERSE OSMOSIS UNIT OF A DISHWASHER
LAVE-VAISSELLE ET PROCÉDÉ DE SURVEILLANCE D'ERREUR D'UNE UNITÉ D'OSMOSE INVERSE D'UN LAVE-VAISSELLE

(30) Priorität: 31.01.2019 DE 102019102439
(43) Veröffentlichungstag der Anmeldung: 05.08.2020
(73) Patentinhaber: MEIKO Maschinenbau GmbH & Co. KG, 77652 Offenburg (DE)
(72) Erfinder: KUPETZ, Joachim, 77791 Berghaupten (DE); SUHM, Norbert, 77723 Gengenbach (DE); HUBER, Phillipp, 77704 Oberkirch-Tiergarten (DE); SANTO, Martin, 77948 Friesenheim-Oberweier (DE)
(74) Vertreter: Mertzlufft-Paufler, Cornelius

(56) Entgegenhaltungen:
- EP-A1- 3 037 027
- WO-A1-2005/046420
- DE-C1- 19 818 691
- DE-C1- 19 922 628

## Beschreibung

Die Erfindung betrifft eine Spülmaschine, insbesondere eine Zweikreis-Spülmaschine, mit einem Kaltwasseranschluss und mit einer dem Kaltwasseranschluss nachgeordneten Trennstelle, die ein Hindernis gegen zum Kaltwasseranschluss rückfließendes Wasser bildet, und mit einer Umkehrosmoseeinheit, die in einem Strömungsweg der Trennstelle nachgeordnet ist, wobei die Trennstelle mit einem Pufferbehälter verbunden ist. Hierbei kann in dem Pufferbehälter wenigstens ein Füllstandssensor angeordnet sein.

Zweikreis-Spülmaschinen können beispielsweise dadurch charakterisiert werden, dass ein Klarspülkreislauf getrennt von einem Waschkreislauf ausgeführt ist.

Die Erfindung betrifft weiter ein Verfahren zur Fehlerüberwachung einer Umkehrosmoseeinheit einer Spülmaschine, mit einem Kaltwasseranschluss und mit einer dem Kaltwasseranschluss nachgeordneten Trennstelle, die ein Hindernis gegen zum Kaltwasseranschluss rückfließendes Wasser bildet, und mit einer Umkehrosmoseeinheit, die im Strömungsweg der Trennstelle nachgeordnet ist.

Hierbei kann die Trennstelle einen Pufferbehälter aufweisen und es kann wenigstens ein Füllstand des Pufferbehälters überwacht werden. Der Pufferbehälter kann hierbei in die Trennstelle integriert oder separat von dieser, beispielsweise als separates Bauteil, ausgebildet sein.

Hierbei kann alternativ oder zusätzlich ein Waschraum aus einem Boiler gespeist und der Boiler aus der Umkehrosmoseeinheit versorgt werden, wobei wenigstens ein Füllstand des Boilers überwacht wird, wobei der Kaltwasseranschluss geöffnet wird, wenn der Füllstand des Boilers einen Minimalpegelwert unterschreitet.

Es ist bekannt, Umkehrosmoseeinheiten bei Spülmaschinen einzusetzen, um reines Wasser zum Klarspülen zu erzeugen. Hierbei besteht der Wunsch, derartige Umkehrosmoseeinheiten in die Spülmaschine zu integrieren.

Aus EP 3 037 027 A1 ist eine Spülmaschine mit einer Wasseraufbereitungsanlage bekannt, wobei die Spülmaschine einen Anschluss für Rohwasser und eine Wasseraufbereitungsanlage aufweist, wobei die Wasseraufbereitungsanlage einen Enthärter, eine Umkehrosmoseanlage und einen Ausgleichsbehälter umfasst. Der Enthärter ist hierbei ausgebildet, um das Rohwasser von dem Anschluss zu enthärten. Der Ausgleichsbehälter ist fluid zwischen dem Enthärter und der Umkehrosmoseanlage angeordnet und stellt einen Zwischenspeicher für das enthärtete Wasser vor dem Enthärter bereit.

Aus DE 19818691 C1 ist ein Verfahren zur Regelung einer Umkehrosmoseanlage bekannt, wobei zur Regelung einer Umkehrosmoseanlage mit Rückführung überschüssig erzeugten Permeats in ein vorgeschaltetes Puffergefäß durch eine Ventilschaltung zum Zwecke der Ausbeuteeinstellung das Konzentrat zeitweise in das Puffergefäß zurückgeleitet und in den übrigen Seiten in den Abfluss geleitet wird.

Aus DE 19922628 C1 ist ein Verfahren zur Steuerung einer Umkehrosmoseanlage bekannt, wobei zur Steuerung einer Umkehrosmoseanlage mit Rückführung überschüssig erzeugten Permeats und zeitweiliger Rückführung des Konzentrats in ein vorgeschaltetes Puffergefäß der Funktionsablauf von einem einzigen Füllstandsensor in Verbindung mit einem Zeitmesser durch periodisches Schalten eines Wasser-Zulaufventils und eines Konzentrat-Abscheideventils gesteuert wird.

Aus WO 2005/046420 A1 ist eine maschinenseitig integrierte Umkehr-Osmose-Einrichtung für Geschirrspülmaschinen bekannt, wobei die Spülmaschine eine Klarspüleinrichtung, mit welcher in Umkehr-Osmose aufbereitetes Wasser auf das Reinigungsgut aufgebracht wird, und mindestens einen Vorratsbehälter für eine Flüssigkeit umfasst und mindestens ein Membran-Modul und eine Druckpumpe zur Durchführung der Umkehr-Osmose an bereits maschinenseitig vorgesehenen Anschlussventilen und dem Vorratsbehälter angeschlossen sind und die Druckpumpe sowie die maschinenseitig vorgesehenen Anschlussventile in die Maschinensteuerung integriert sind.

Der Erfindung liegt die Aufgabe zugrunde, die ordnungsgemäße Funktion einer Umkehrosmoseeinheit zu überwachen.

Zur Lösung der genannten Aufgabe sind erfindungsgemäß die Merkmale von Anspruch 1 vorgesehen. Insbesondere wird somit erfindungsgemäß zur Lösung der genannten Aufgabe bei einer Spülmaschine der eingangs beschriebenen Art vorgeschlagen, dass ein Zeitmessmittel mit dem wenigstens einen Füllstandssensor gekoppelt ist, so dass eine Zeitmessung durch den Füllstandssensor startbar und/oder stoppbar ist. Von Vorteil ist dabei, dass Fehlererkennungskriterien, die von einer Zeitkomponente abhängen, deren einseitige oder beidseitige zeitliche Begrenzung durch das Erreichen oder Verlassen eines Füllstands gegeben ist, automatisiert überprüfbar ist. Eine solche automatisierte Überprüfung kann wertvolle Informationen im Servicefall bereitstellen, durch die eine Zeitspanne für eine Reparatur oder Instandsetzung der Spülmaschine verkürzt oder der Einsatz eines qualifizierten Servicetechniker sogar ganz vermieden werden kann. So könnten häufige Fehlerursachen wie verstopfte Siebe oder Membranen oder ein defekter/inaktiver Kaltwasseranschluss bereits durch den (wenig qualifizierten) Anwender beseitigt werden, bevor ein Servicetechniker gerufen werden muss. Durch eine Fallunterscheidung, beispielsweise wie weiter unten beschrieben, ist es möglich, dem Anwender automatisiert Information zur Art eines festgestellten Fehler und zu dessen Behebung bereitzustellen.

Insbesondere kann die erfindungsgemäße Spülmaschine hierzu eine Fehlererkennungseinheit, die zur Auswertung wenigstens eines Fehlererkennungskriteriums, das wenigstens einem Füllstand zugeordnet ist, und in die die wenigstens eine gemessene Zeit eingeht, eingerichtet ist, aufweisen.

Zur Ausgabe des ermittelten Fehlers kann eine Ausgabeeinheit ausgebildet sein, beispielsweise eine Anzeige wie ein Display oder eine Datenausgabe zur Weiterverarbeitung.

Bei einer vorteilhaften Ausgestaltung ist die Spülmaschine gekennzeichnet durch einen Waschraum und einen Boiler, wobei der Waschraum aus dem Boiler versorgt ist und der Kaltwasseranschluss den Boiler speist, insbesondere über die Umkehrosmoseeinheit. Von Vorteil ist dabei, dass für eine Fehlerüberwachung der Umkehrosmoseeinheit auf Mittel einer Fehlerüberwachung des Boilers zurückgegriffen werden kann, insbesondere um Fehler außerhalb der Umkehrosmoseeinheit ausschließen zu können.

Bei einer vorteilhaften Ausgestaltung kann vorgesehen sein, dass die Trennstelle im Strömungsweg eine Freistrecke aufweist, die als freier Auslauf ausgebildet sein kann. Die Trennstelle kann aber auch eine andere Bauform aufweisen. Von Vorteil ist dabei, dass ein Rückfluss von Brauchwasser in den Kaltwasseranschluss vermeidbar ist. Dies ist von Vorteil, um weitere Nutzer des Kaltwasseranschlusses vor Verunreinigungen zu schützen. Insbesondere kann hierbei vorgesehen sein, dass die Freistrecke nach außen offen ausgebildet ist. Somit kann sicher verhindert werden, dass auch bei großen Rückstauungen ein Rückfluss in den Kaltwasseranschluss auftritt.

Bei einer vorteilhaften Ausgestaltung kann vorgesehen sein, dass mit dem wenigstens einen Füllstandssensor das Erreichen wenigstens eines Füllstands detektierbar ist. Von Vorteil ist dabei, dass der Füllstandssensor zum Starten oder Stoppen einer Zeitmessung verwendbar ist.

Besonders günstig ist es, wenn mit dem Füllstandssensor wenigstens zwei unterschiedliche Füllstände nacheinander detektierbar sind. Der Füllstandssensor kann hierbei beispielsweise zu einer kontinuierlichen Messung des Füllstandes eingerichtet sein oder wenigstens zwei Füllstandssenoreinheiten aufweisen, die jeweils einen Pegel des Füllstandes überwachen.

Hierbei kann der Füllstandssensor somit zu einer kontinuierlichen Messung von Füllständen auf einer kontinuierlichen Skala ausgebildet sein. Es sind beispielsweise Ultraschallsensoren bekannt, mit denen eine solche kontinuierliche Füllstandsmessung erreichbar ist. Es sind auch andere Füllstandssensoren für eine kontinuierliche Messung von Füllständen bekannt, beispielsweise druckbasierte Füllstandssensoren oder Füllstandssensoren mit Methoden der Bildverarbeitung.

Alternativ kann der Füllstandssensor somit auch eine oder mehrere Füllstandssensoreinheiten aufweisen, die zur Überwachung jeweils eines diskreten Füllstands, beispielsweise eines Minimalpegelwerts und/oder eines Maximalpegelwerts, eingerichtet sind. Eine einfach handhabbare Anordnung, die dies erreicht, sind Füllstandssensoreinheiten in Form von Elektroden, mit denen eine Leitfähigkeit eines Mediums, welches die Elektroden überbrückt, messbar ist. Diese Elektroden sind jeweils an den entsprechenden Pegelwerten angeordnet und werden Strom leiten, wenn das Wasser den Pegel erreicht. Alternativ sind auch Schwimmer an den Pegelwerten einsetzbar, die Kontakte schließen und öffnen können.

Bei einer vorteilhaften Ausgestaltung kann vorgesehen sein, dass mit dem wenigstens einen Füllstandssensor ein Überschreiten eines Füllstandes von einem Unterschreiten des Füllstandes unterscheidbar ist. Somit ist beispielsweise eine Zeitmessung startbar, wenn ein Pegelwert als Füllstand überschritten wird, und nicht startbar, wenn der Füllstand unterschritten wird, oder umgekehrt. Dies ist mit Vorteil für die bereits erwähnte Fallunterscheidung verwendbar.

Zur Lösung der genannten Aufgabe können alternativ oder zusätzlich zu der vorgenannten Lösung erfindungsgemäß die Merkmale des ersten unabhängigen, auf ein Verfahren gerichteten, Anspruchs vorgesehen sein. Insbesondere kann somit zur Lösung der genannten Aufgabe bei einem Verfahren der eingangs beschriebenen Art in der ersten Alternative erfindungsgemäß vorgesehen sein, dass ein Fehlererkennungskriterium geprüft wird, in welches eine gemessene Zeit und wenigstens ein Füllstand des Pufferbehälters eingeht, dass eine Zeitmessung gestartet oder gestoppt wird, wenn der Füllstand erreicht ist, und dass ein Ergebnis der Zeitmessung in das hinterlegte Fehlererkennungskriterium eingesetzt wird, wobei ein Fehler ausgegeben wird, wenn das Fehlererkennungskriterium erfüllt ist. Es ist somit ein einfach handhabbares Verfahren bereitstellbar, mit welchem verschiedene Fehler einer Umkehrosmoseeinheit erkennbar sind.

Bei einer vorteilhaften Ausgestaltung kann vorgesehen sein, dass mit der Zeitmessung eine Zeitspanne zwischen dem Erreichen zweier Füllstände gemessen wird. Beispielsweise kann hierbei vorgesehen sein, dass das Fehlererkennungskriterium erfüllt ist, wenn die gemessene Zeitspanne einen Schwellwert überschreitet. Dies kann beispielsweise in dem Fall, dass der zeitlich erste Füllstand, zum Beispiel als Minimalpegelwert, niedriger als der zeitlich zweite Füllstand, zum Beispiel als Maximalpegelwert, ist, auf einen defekten Kaltwasseranschluss hindeuten. Hier kann ein entsprechender Fehler als Fehlermeldung ausgegeben werden. Dies kann beispielsweise in dem Fall, dass der zeitlich erste Füllstand, zum Beispiel als Maximalpegelwert, höher als der zeitlich zweite Füllstand, zum Beispiel als Minimalpegelwert, ist, auf einen defekten Ablauf durch die Umkehrosmoseeinheit, beispielsweise aufgrund einer Verstopfung oder einer defekten Pumpe, hindeuten. Auch hier kann ein entsprechender Fehler als Fehlermeldung ausgegeben werden.

Bei einer vorteilhaften Ausgestaltung kann vorgesehen sein, dass mit der Zeitmessung eine Zeitspanne nach einem Überschreiten oder Unterschreiten des Füllstandes gemessen wird. Somit ist ein Füllstand als auslösendes Ereignis für die Zeitmessung verwendbar. Insbesondere kann hierbei vorgesehen sein, dass das Fehlererkennungskriterium erfüllt ist, wenn die gemessene Zeitspanne einen Schwellwert überschreitet. Es ist somit beispielsweise einfach überprüfbar, ob eine Pumpe der Umkehrosmoseeinheit eine genügend große Förderleistung aufbringt, um den Pufferbehälter - insbesondere bei geschlossenem Kaltwasseranschluss - in einer vorgeschriebenen Zeitspanne zu entleeren, oder ob ein Kaltwasseranschluss genügend Volumenstrom bereitstellt, um den Pufferbehälter - insbesondere bei abgeschalteter Pumpe - in einer vorgeschriebenen Zeitspanne zu befüllen.

Beispielsweise kann ein Fehlererkennungskriterium die Unterschreitung eines Minimalpegelwerts betreffen. Hierbei kann vorgesehen sein, dass eine Zeitmessung durch die Unterschreitung - bevorzugt bei laufender Pumpe der Umkehrosmoseeinheit und bei laufendem Kaltwasseranschluss - ausgelöst wird. Wird eine hinterlegte Zeitspanne erreicht, ohne dass ein erneutes Erreichen des Minimalpegelwerts detektiert wird, so wird ein Fehler ausgegeben, dass ein Wasserzufluss über den Kaltwasseranschluss zu gering ist, und/oder es wird die Pumpe abgeschaltet, um ein Trockenlaufen der Pumpe im Betrieb zu verhindern.

Bei einer Ausgestaltung der Erfindung kann vorgesehen sein, dass mit der Zeitmessung eine Zeitspanne bis zu einem Überschreiten oder Unterschreiten des Füllstandes gemessen wird. Somit sind Zeitspannen, die nur einseitig durch das Erreichen oder Verlassen eines Füllstands definiert sind, messbar. Es kann auch hier vorgesehen sein, dass das Fehlererkennungskriterium erfüllt ist, wenn eine vorgegebene Zeitspanne abgelaufen ist.

Hierbei kann vorgesehen sein, dass die Zeitmessung durch ein weiteres Ereignis, beispielsweise ein Einschalten der Spülmaschine, ausgelöst wird. Somit ist auf einfache Weise ein bauseitiger Wassermangel am Kaltwasseranschluss erkennbar, da dann der bereitgestellte Volumenstrom nicht ausreicht, einen Mindestpegel innerhalb einer vorgegebenen Zeitspanne zu erreichen. Bei der Definition der Zeitspanne kann auch darauf geachtet werden, dass die Pumpe der Umkehrosmoseeinheit häufig im abgeschalteten Zustand den Wasserfluss nicht sperrt, so dass hier auch beim Befüllen des Pufferbehälters immer ein Abfluss stattfindet.

Alternativ oder zusätzlich kann hierbei vorgesehen sein, dass das weitere Ereignis ein Unterschreiten des Füllstandes oder eines weiteren Füllstandes ist oder umfasst. Somit ist, insbesondere nach einem Öffnen des Kaltwasseranschlusses und bei eingeschalteter Pumpe der Umkehrosmoseeinheit, ein Zeitmessmittel startbar, sobald ein, insbesondere der bereits erwähnte, Maximalpegelwert unterschritten wird. Wird nun der Kaltwasseranschluss geschlossen, so sollte die Pumpe in der Lage sein, den Pufferbehälter innerhalb einer vorgegebenen Zeitspanne zu entleeren, bis ein, insbesondere der bereits erwähnte, Minimalpegelwert erreicht ist. Verstreicht die Zeitspanne, ohne dass der Minimalpegelwert erreicht wird, so kann als Fehler eine Meldung, dass ein Vorfilter der Pumpe verstopft und/oder die Pumpe defekt ist, generiert und/oder ausgegeben werden. Das weitere Ereignis kann auch ein Überschreiten des Füllstandes oder eines weiteren Füllstandes sein oder umfassen.

Alternativ kann auf diese Weise auch eine Ausschaltverzögerung der Pumpe wie folgt realisiert werden. Ist der Füllstand oberhalb eines, insbesondere des bereits erwähnten, Minimalpegelwerts, so wird die Pumpe bei geöffnetem Kaltwasseranschluss eingeschaltet, bis der Füllstand unterhalb des Minimalpegelwerts fällt. Hierdurch wird eine Zeitmessung gestartet. Diese Zeitmessung wird beendet, wenn der Minimalpegelwert wieder erreicht ist. Verstreicht eine vorgegebene Zeitspanne, ohne dass der minimale Pegel erreicht wird, so wird ein Fehler generiert, der die Meldung beinhaltet, dass der Wasserzufluss zu gering ist am Kaltwasseranschluss. In diesem Fall ist das weitere Ereignis somit das Unterschreiten des Minimalpegelwerts als weiterer Füllstand, und der Füllstand, der die Zeitmessung beendet, ebenfalls der Minimalpegelwert.

In dem bereits beschriebenen Fall, dass eine Zeitmessung zwischen einem Minimalpegelwert und einem Maximalpegelwert ausgeführt wird, kann beispielsweise gesagt werden, dass der Füllstand, welcher die Zeitmessung beendet, der Maximalpegelwert (bzw. der Minimalpegelwert) ist, während der weitere Füllstand, welcher die Zeitmessung auslöst, der Minimalpegelwert (bzw. der Maximalpegelwert) ist.

Zur Lösung der genannten Aufgabe können alternativ oder zusätzlich zu der vorgenannten Lösung erfindungsgemäß die Merkmale des zweiten unabhängigen, auf ein Verfahren gerichteten Anspruchs vorgesehen sein. Insbesondere kann somit zur Lösung der genannten Aufgabe bei einem Verfahren der eingangs beschriebenen Art in der zweiten Alternative erfindungsgemäß vorgesehen sein, dass ein Waschraum aus einem Boiler gespeist wird und der Boiler aus der Umkehrosmoseeinheit versorgt wird, wobei wenigstens ein Füllstand des Boilers überwacht wird, wobei der Kaltwasseranschluss geöffnet wird, wenn der Füllstand des Boilers einen Minimalpegelwert unterschreitet, und dass ein Fehler der Umkehrosmoseeinheit erkannt wird, wenn bei geöffnetem Kaltwasseranschluss der Füllstand des Boilers einen Maximalpegelwert nicht innerhalb einer vorgegebenen Zeitspanne erreicht. Die Erfindung macht sich hier zunutze, dass bereits möglicherweise vorhandene Mittel am Boiler, nämlich Füllstandssensoren, für eine Funktionsüberwachung der Umkehrosmoseeinheit verwendbar sind, wenn beispielsweise der Boiler aus der Umkehrosmoseeinheit befüllt wird.

Hierbei kann vorgesehen sein, dass der Fehler nur dann ausgegeben wird, wenn kein Fehler des Kaltwasseranschlusses erkannt wurde. Ein Fehler des Kaltwasseranschlusses kann beispielsweise durch Auswertung eines Fehlererkennungskriteriums in der zuvor beschriebenen Art erfolgen.

Bei einer vorteilhaften Ausgestaltung kann vorgesehen sein, dass geprüft wird, ob ein erster niedriger Füllstand nicht erreicht ist und dass ein Fehler erkannt wird, wenn gleichzeitig das Erreichen eines zweiten höheren Füllstandes detektiert wird. Somit ist eine ordnungsgemäße Funktion von mehreren Füllstandsssensorenheiten überprüfbar, da das Wasser im Pufferbehältner nicht gleichzeitig ein Erreichen des höheren Füllstands und ein Unterschreiten des niedrigeren Füllstands bewirken kann.

In die beschriebenen Fehlererkennungskriterien können somit Schaltzustände der Pumpe der Umkehrosmoseeinheit und/oder des Kaltwasseranschlusses eingehen.

Zur Ausführung des erfindungsgemäßen Verfahrens, insbesondere wie zuvor beschrieben und/oder nach einem der auf ein Verfahren gerichteten Schutzansprüche, kann eine erfindungsgemäße Spülmaschine, insbesondere wie zuvor beschrieben und/oder nach einem der auf eine Spülmaschine gerichteten Schutzansprüche, mit Mitteln zur Ausführung eines erfindungsgemäßen Verfahrens ausgerüstet sein.

Die Erfindung wird nun anhand von Ausführungsbeispielen näher erläutert, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

### Es zeigt:

- Fig. 1: eine schematische Darstellung einer erfindungsgemäßen Spülmaschine,
- Fig. 2: eine erste Variante eines erfindungsgemäßen Verfahrens in einem Ablaufplan, bei dem ein bauseitiger Wassermangel erkannt werden kann,
- Fig. 3: eine zweite Variante eines erfindungsgemäßen Verfahrens in einem Ablaufplan, mit dem eine Verstopfung eines Vorfilters oder ein Defekt einer Pumpe erkennbar ist,
- Fig. 4: eine dritte Variante eines erfindungsgemäßen Verfahrens in einem Ablaufplan, mit dem eine Verblockung oder ein Defekt einer Membran der Umkehrosmoseeinheit erkannt werden kann,
- Fig. 5: eine vierte Variante eines erfindungsgemäßen Verfahrens in einem Ablaufplan, mit dem die Funktion des Füllstandssensors überwachbar ist,
- Fig. 6: eine fünfte Variante eines erfindungsgemäßen Verfahren in einem Ablaufplan, mit dem erkennbar ist, dass der Pufferbehälter nicht maximal gefühlt werden kann, und
- Fig. 7: eine sechste Variante eines erfindungsgemäßen Verfahrens in einem Ablaufplan, mit dem ein zu geringer Wasserzufluss am Kaltwasseranschluss erkennbar ist.

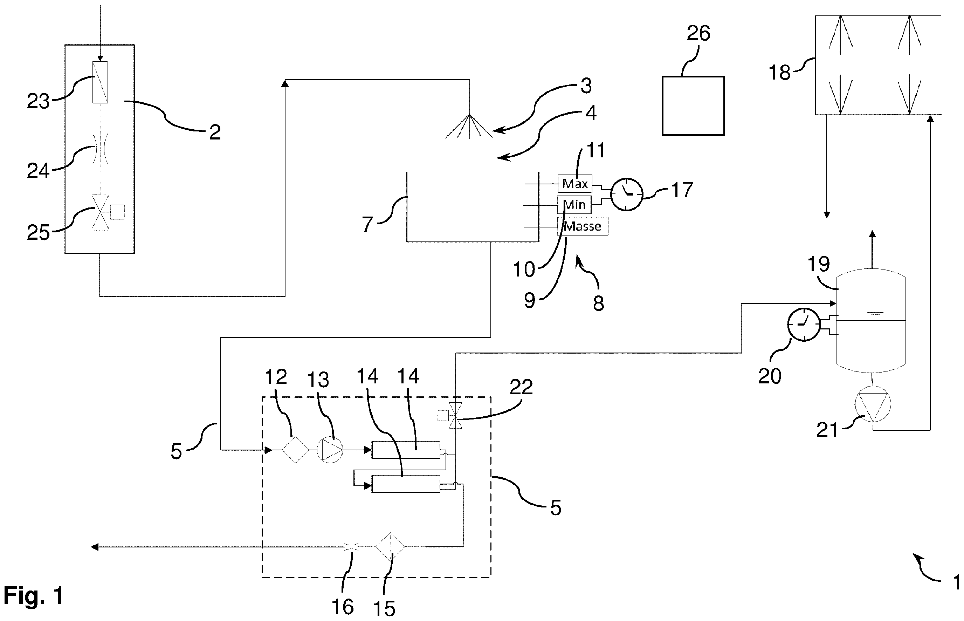

Figur 1 zeigt eine im Ganzen mit 1 bezeichnete Spülmaschine.

Die Spülmaschine 1 hat einen Kaltwasseranschluss 2, dem eine Trennstelle 3 nachgeordnet ist. Die Trennstelle 3 hat hierbei in an sich bekannter Weise eine Freistrecke 4, die nach außen offen ist und die das Zurücksaugen von Wasser in den Kaltwasseranschluss 2 verhindert.

Die Spülmaschine 1 hat weiter eine Umkehrosmoseeinheit 5, die im Strömungsweg 6 der Trennstelle 3 nach geschaltet ist.

Die Umkehrosmoseeinheit 5 wird hierbei aus einem Pufferbehälter 7 gespeist, welcher über die Trennstelle 3 gefüllt wird.

Der Pufferbehälter 7 weist einen Füllstandssensor 8 mit 3 Elektroden 9, 10, 11 auf. Die Elektroden 9 ist eine Masseelektrode. Die Elektrode 10 ist an einer Position angeordnet, die einem Minimalpegelwert des Pufferbehälters 7 entspricht, während die Elektrode 11 an einer Stelle angeordnet ist, die einem Maximalpegelwert des Pufferbehälters 7 entspricht.

Die Umkehrosmoseeinheit 5 hat in an sich bekannter Weise einen Vorfilter 12, eine Pumpe 13, eine oder mehrere Membraneinheiten 14, einen weiteren Filter 15 und eine Drossel 16. Jede der Membraneinheiten 14 hat eine nicht weiter dargestellte, an sich bekannte Membran, welche die Umkehrosmose ausführt. Die Drossel 16 hält hierbei den Druck der Pumpe 13 in den Membraneinheiten 14 aufrecht.

Die Spülmaschine 1 hat weiter ein Zeitmessmittel 17, welches mit dem Füllstandssensor 8 gekoppelt ist, so dass jede der Elektroden 10, 11 eine Zeitmessung am Zeitmessmittel 17 starten und/oder stoppen kann. Das Zeitmessmittel 17 ist im Ausführungsbeispiel ein Rückwärtszähler. Es kann aber auch jedes andere Zeitmessmittel realisiert sein.

Die Spülmaschine 1 hat weiter einen Waschraum 18, in dem Geschirr, Besteck, Tablets und dergleichen Güter, zum Beispiel auch Güter in einem industriellen Fertigungsprozess, gewaschen werden können. Der Waschraum 18 ist hierbei aus einem Boiler 19 versorgt, der aus der Umkehrosmoseeinheit 5 gespeist ist.

An dem Boiler 19 ist ebenfalls ein, hier nicht weiter dargestellter, Füllstandssensor ausgebildet, der zumindest einen Maximalpegelwert und einen Minimalpegelwert im Boiler 19 auszeichnet und der ein Zeitmessmittel 17 je nach Füllstand starten und/oder stoppen kann.

Eine Pumpe 21 fördert das erhitzte Wasser aus dem Boiler 19 in den Waschraum 18.

Ein Ventil 22 öffnet oder schließt eine Verbindungsleitung zwischen der Umkehrosmoseeinheit 5 und dem Boiler 19.

Der Kaltwasseranschluss 2 hat, in an sich bekannter Weise, einen Filter 23, einen Mengenregler 24 und ein Schaltventil 25.

Die dargestellten Komponenten der Spülmaschine 1 sind beispielhaft gezeigt. Bei weiteren erfindungsgemäßen Ausführungsbeispielen sind andere Typen, Anzahlen oder Anordnungen von Komponenten realisiert.

In einer Steuerungseinheit 26 laufen die folgenden Verfahren wiederkehrend ab, beispielsweise zyklisch nacheinander oder parallel zueinander.

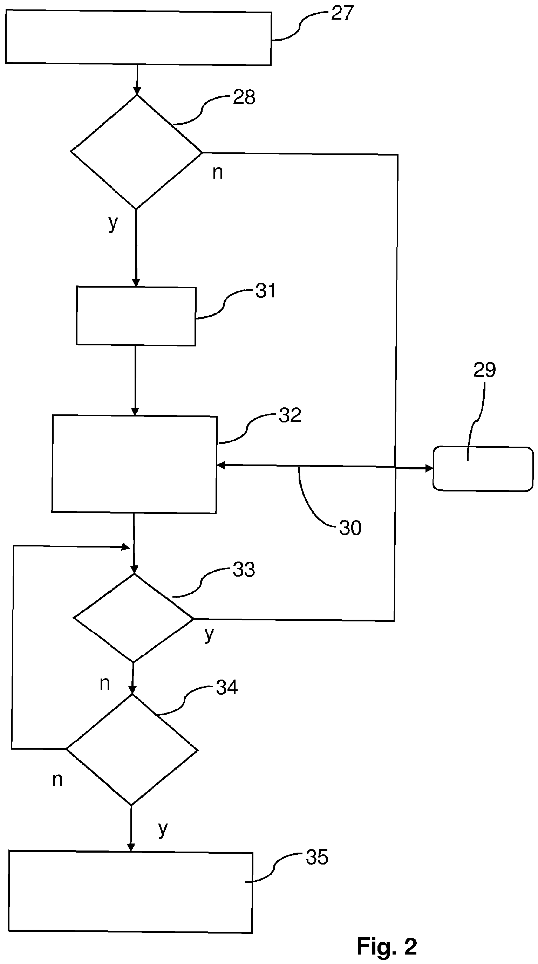

Fig. 2 zeigt ein Verfahren zur Fehlererkennung eines bauseitigen Wassermangels.

Ausgangspunkt ist eine Anforderung zum Füllen 27.

Zunächst wird in einem Überprüfungsschritt 28 geprüft, ob die Elektrode 10 einen Füllstand unterhalb des Minimalpegelwerts detektiert.

Ist dies nicht der Fall, Alternative "n", so wird die Routine in einem Beendigungsschritt 29 beendet, wobei das Zeitmessmittel 17 mit einem Reset 30 zurückgesetzt wird.

Ist dies dagegen der Fall, Alternative "y", so wird in einem Kaltwasseröffnungsschritt 31 das Schaltventil 25 geöffnet.

Anschließend wird in einem Zeitmessungsstartschritt 32 eine Zeitmessung durch das Zeitmessmittel 17 gestartet. Die Zeitmessung wird demnach durch ein Ereignis gestartet, das nicht durch das Erreichen eines bestimmten Füllstands gekennzeichnet ist.

Während der Pufferbehälter 7 aus dem Kaltwasseranschluss 2 gefüllt wird, wird nun wiederkehrend in einem Füllstandsabfrageschritt 33 geprüft, ob der Mindestpegelwert an der Elektrode 10 erreicht ist ("Min=1").

Ist dies der Fall, Alternative "y", so wird die Routine in einem Beendigungsschritt 29 beendet, wobei das Zeitmessmittel 17 gestoppt und mit einem Reset 30 zurückgesetzt wird, beispielsweise auf einen voreingestellten Startwert "Timer Füllüberwachung" eines Rückwärtszählers. Mit anderen Worten wird eine Zeitspanne bis zum Überschreiten des Minimalpegelwertes gemessen.

Ist dies nicht der Fall, Alternative "n", so wird in einem Zeitdauerprüfschritt 34 geprüft, ob eine vorgegebene Zeitdauer verstrichen ist, beispielsweise ob ein Rückwärtszähler bei Null angelangt ist.

Ist dies nicht der Fall, Alternative "n", so wird erneut der Füllstandsabfrageschritt 33 ausgeführt.

Ist dies der Fall, Alternative "y", so ist das eingerichtete Fehlererkennungskriterium erfüllt, welches die Anforderung zum Füllen 27 mit dem Überschreiten einer vorgegebenen Zeitdauer am Zeitmessmittel 17 verknüpft.

Es wird daher in einem Fehlerausgabeschritt 35 der Fehler "bauseitiger Wassermangel" ausgegeben, da der Wasserzulauf nicht ausreicht, um den Minimalpegelwert im Pufferbehälter 7 vorgegebenen Zeit zu erreichen. Anschließend beendet sich die Routine.

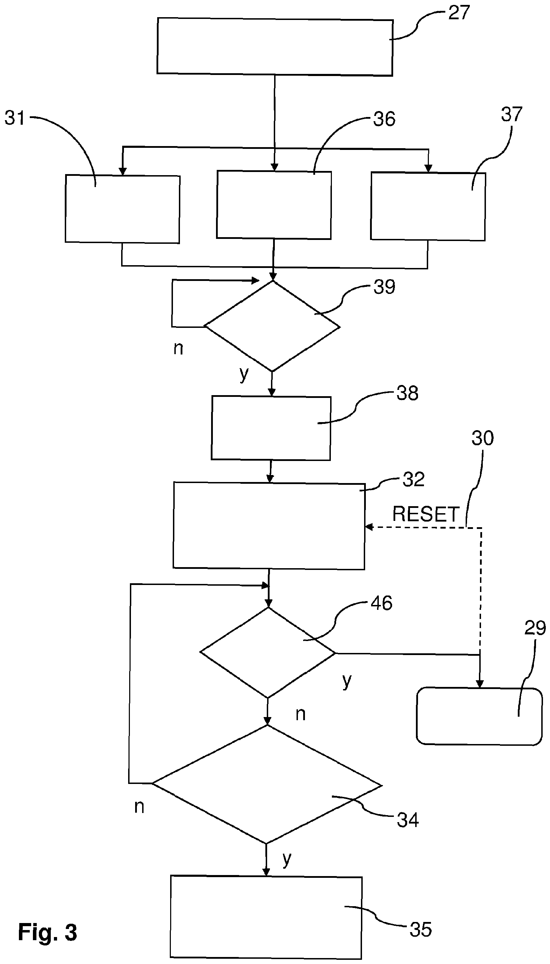

Fig. 3 zeigt ein Verfahren zur Fehlererkennung eines verstopften Vorfilters 12.

Die Routine startet wieder mit der Anforderung zum Füllen 27.

In einem Kaltwasseröffnungsschritt 31 wird das Schaltventil geöffnet, um den Pufferbehälter 7 zu füllen.

Gleichzeitig wird in einem Verifikationsschritt 36 überprüft, ob der Mindestpegelwert im Pufferbehälter 7 bereits erreicht ist.

Dies kann beispielsweise im Anschluss an die Routine nach Fig. 2 der Fall sein.

Gleichzeitig wird in einem Pumpenstartschritt 37 die Pumpe 13 gestartet.

Nun wird in einem Füllstandsabfrageschritt 39 geprüft, ob der Maximalpegelwert an der Elektrode 11 erreicht ist.

Ist dies nicht der Fall, Alternative "n", so wird weiter gewartet und der Füllstandsabfrageschritt 39 erneut ausgeführt.

Ist dies der Fall, Alternative "y", so wird in einem Kaltwasserstoppschritt 38 das Schaltventil 25 geschlossen und in einem Zeitmessungsstartschritt 32 eine Zeitmessung durch das Zeitmessmittel 17 gestartet.

Nun wird bei laufender Pumpe 13 in einem Füllstandsabfrageschritt 46 geprüft, ob der Minimalpegelwert an der Elektrode 10 unterschritten wird.

Ist dies der Fall, Alternative "y", so wird die Routine in einem Beendigungsschritt 29 beendet, wobei das Zeitmessmittel 17 gestoppt und mit einem Reset 30 zurückgesetzt wird, beispielsweise auf einen voreingestellten Startwert "Timer Unterschreiten Minimalpegelwert" eines Rückwärtszählers. Mit anderen Worten wird eine Zeitspanne ab dem Erreichen des Maximalpegelwerts und bis zum Unterschreiten des Minimalpegelwertes gemessen.

Ist dies nicht der Fall, Alternative "n", so wird in einem Zeitdauerprüfschritt 34 geprüft, ob eine vorgegebene Zeitspanne verstrichen ist, hier ob der Rückwärtszähler Null erreicht hat.

Ist dies nicht der Fall, Alternative "n", so wird das Verfahren mit dem Füllstandsabfrageschritt 46 fortgesetzt.

Ist dies der Fall, Alternative "y", so ist das eingerichtete Fehlererkennungskriterium erfüllt, welches das fehlende Unterschreiten des Minimalpegelwertes, das Einschalten der Pumpe 13 und das Öffnen des Schaltventils 25 mit dem Überschreiten einer vorgegebenen Zeitdauer am Zeitmessmittel 17 verknüpft.

Es wird daher in einem Fehlerausgabeschritt 35 der Fehler "Vorfilter 12 verstopft oder Pumpe 13 defekt" ausgegeben, da die Pumpleistung der Pumpe 13 nicht ausreicht, um den Minimalpegelwert im Pufferbehälter 7 in der vorgegebenen Zeit zu erreichen. Anschließend beendet sich die Routine.

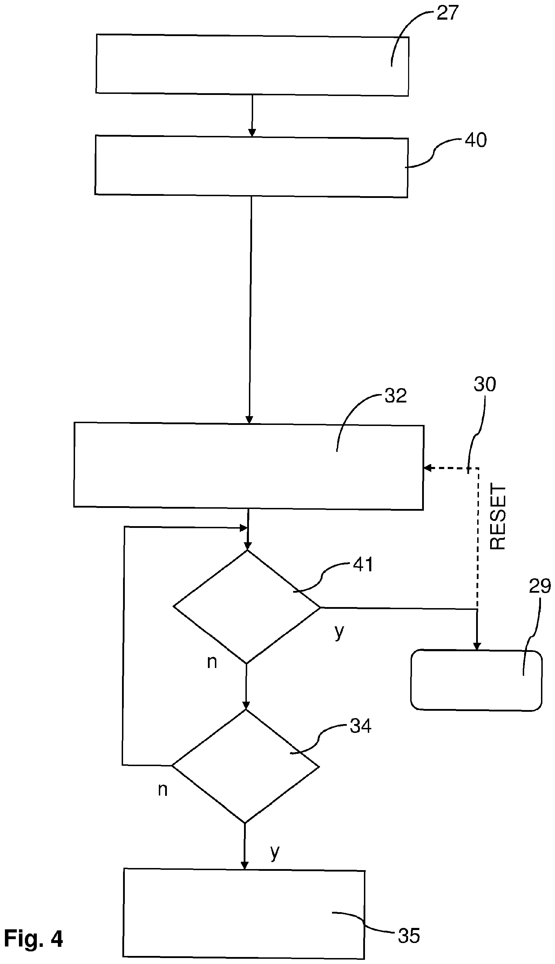

Fig. 4 zeigt ein Verfahren zur Fehlererkennung einer defekten Membran der Umkehrosmoseeinheit 5.

Nach einer Anforderung zum Füllen 27 wird in einem Boilerfüllschritt 40 das Ventil 22 geöffnet, um den Boiler zu füllen.

Anschließend wird in einem Zeitmessungsstartschritt 32 durch das Zeitmessmittel 20, das mit dem Zeitmessmittel 17 zusammenfallen kann, eine Zeitmessung gestartet, beispielsweise mit einem Startwert "Timer Boiler Füllzeitüberwachung" für einen Rückwärtszähler.

Nun wird in einem Niveauprüfschritt 41 geprüft, ob ein Zielniveau im Boiler 19 erreicht ist.

Ist dies der Fall, Alternative "y", so wird die Routine in einem Beendigungsschritt 29 beendet, wobei das Zeitmessmittel 20 gestoppt und mit einem Reset 30 zurückgesetzt wird, beispielsweise auf einen voreingestellten Startwert "Timer Boiler Füllzeitüberwachung" eines Rückwärtszählers. Mit anderen Worten wird eine Zeitspanne ab dem Start des Befüllvorgangs bis zum Erreichen des Zielniveaus im Boiler 19 gemessen.

Ist dies nicht der Fall, Alternative "n", so wird in einem Zeitdauerprüfschritt 34 geprüft, ob eine vorgegebene Zeitspanne verstrichen ist, hier ob der Rückwärtszähler Null erreicht hat.

Ist dies nicht der Fall, Alternative "n", so wird das Verfahren mit dem Niveauprüfschritt 41 fortgesetzt.

Ist dies der Fall, Alternative "y", so ist das eingerichtete Fehlererkennungskriterium erfüllt, welches den Start des Befüllvorgangs für den Boiler mit dem Überschreiten einer vorgegebenen Zeitdauer am Zeitmessmittel 20 verknüpft.

Es wird daher in einem Fehlerausgabeschritt 35 der Fehler "Membran Umkehrosmose verblockt/defekt" ausgegeben, wenn kein bauseitiger Wassermangel (Fig. 1) erkannt ist, da die Pumpleistung der Pumpe 13 nicht ausreicht, um das Zielniveau im Boiler 19 in der vorgegebenen Zeit zu erreichen. Anschließend beendet sich die Routine.

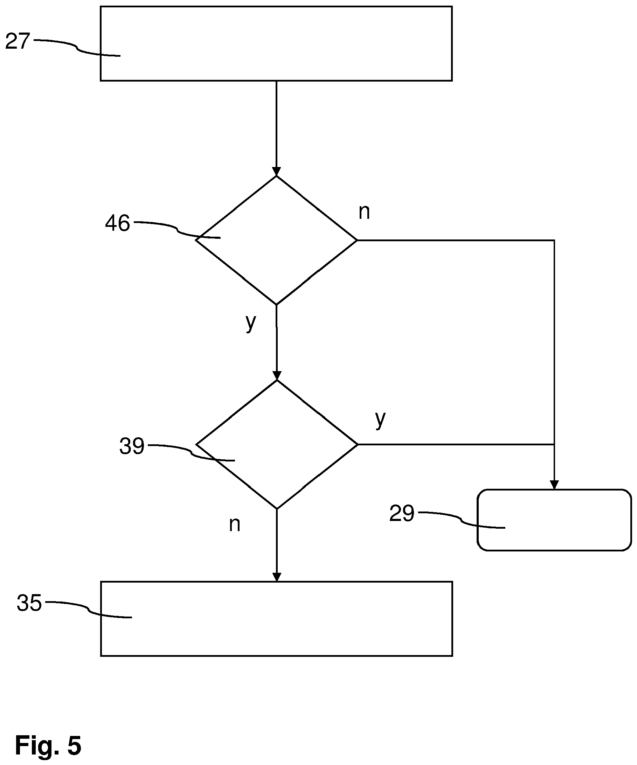

Fig. 5 zeigt ein Verfahren zur Erkennung eines defekten Füllstandssensors, insbesondere einer defekten Leitwerterkennung an den Elektroden 10, 11.

Demnach wird nach einer Anforderung zum Füllen 27 in einem Füllstandsabfrageschritt 46 geprüft, ob der Minimalpegelwert an der Elektrode 10 nicht erreicht ist ("Min=0").

Ist dies nicht der Fall, Alternative "n", so wird die Routine in einem Beendigungsschritt 29 beendet.

Ist dies der Fall, Alternative "y", so wird in einem zweiten Füllstandsabfrageschritt 39 geprüft, ob der Maximalpegelwert an der Elektrode 11 nicht erreicht ist.

Ist dies der Fall, Alternative "y", so wird die Routine in einem Beendigungsschritt 29 beendet.

Ist dies nicht der Fall, Alternative "n", so wird in einem Fehlerausgabeschritt 35 ein Fehler "Niveauerkennung defekt" erkannt, weil nicht gleichzeitig ein erster niedriger Füllstand nicht erreicht und ein zweiter höherer Füllstandes erreicht sein kann.

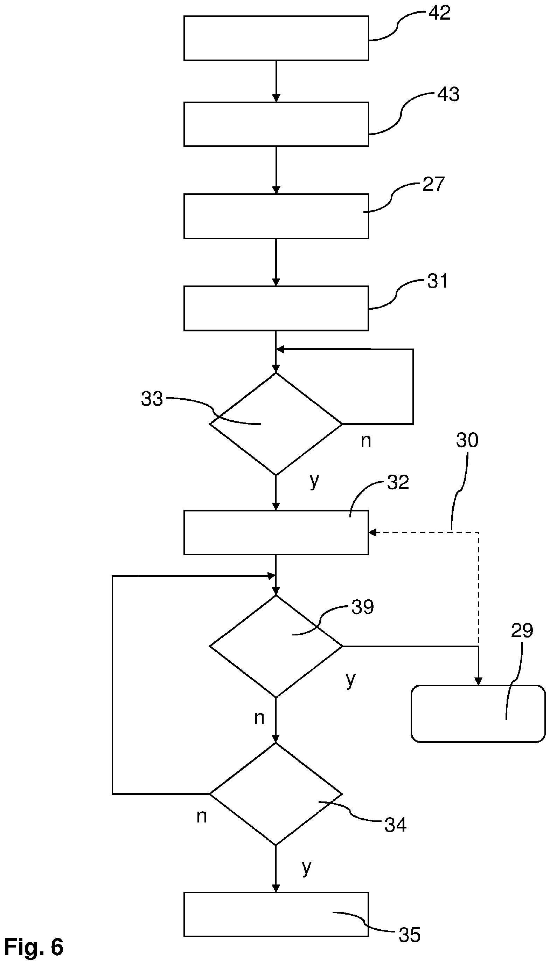

Fig. 6 zeigt ein Verfahren zur Fehlererkennung, dass der Maximalpegelwert nicht erreicht werden kann.

Ausgangspunkt ist der ausgeschaltete Zustand 42 der Spülmaschine 1.

In einem Einschaltvorgang 43 wird die Spülmaschine 1 eingeschaltet.

Dies löst die Anforderung zum Füllen 27 zum ersten Mal aus. Der Pufferbehälter 7 ist leer, da die Umkehrosmoseeinheit 5 bei abgeschalteter Pumpe 13 über die Drossel 16 ausläuft.

Im Kaltwasseröffnungsschritt 31 wird nun der Wasserzufluss gestartet, indem das Schaltventil 25 geöffnet wird. Der Pufferbehälter 7 füllt sich.

In einem Füllstandsabfrageschritt 33 wird nun geprüft, ob der Minimalpegelwert an der Elektrode 10 erreicht ist ("Min=1").

Ist dies nicht der Fall, Alternative "n", so wird weiter gewartet.

Ist dies der Fall, Alternative "y", so wird in einem Zeitmessungsstartschritt 32 das Zeitmessmittel 17 (vgl. Fig. 1) gestartet, beispielsweise durch Start eines Rückwärtszählers von einem Startwert "Timer Füllen bis Max". Es wird somit eine Zeitdauer ab einem Überschreiten eines Füllstandes gemessen.

Nun wird in einem Füllstandsabfrageschritt 39 geprüft, ob der Maximalpegelwert an der Elektrode 11 erreicht ist ("Max=1").

Ist dies der Fall, Alternative "y", so wird die Routine in einem Beendigungsschritt 29 beendet, wobei das Zeitmessmittel 17 gestoppt und mit einem Reset 30 zurückgesetzt wird, beispielsweise auf einen voreingestellten Startwert "Timer Füllen bis Max" des Rückwärtszählers. Mit anderen Worten wird eine Zeitspanne ab dem Erreichen des Minimalpegelwerts bis zum Erreichen des Maximalpegelwerts im Pufferbehälter 7 gemessen.

Ist dies nicht der Fall, Alternative "n", so wird in einem Zeitdauerprüfschritt 34 geprüft, ob eine vorgegebene Zeitspanne verstrichen ist, hier ob der Rückwärtszähler Nullerreicht hat.

Ist dies nicht der Fall, Alternative "n", so wird das Verfahren mit dem Füllstandsabfrageschritt 39 fortgesetzt.

Ist dies der Fall, Alternative "y", so ist das eingerichtete Fehlererkennungskriterium erfüllt, welches die erste Anforderung zum Füllen, das Öffnen des Schaltventils 25, das fehlende Erreichen des Maximalpegelwertes mit dem Überschreiten einer vorgegebenen Zeitdauer am Zeitmessmittel 17 verknüpft.

Es wird daher in einem Fehlerausgabeschritt 35 der Fehler "Maximalpegelwert nicht erreicht" ausgegeben, da der Wasserzufluss am Kaltwasseranschluss 2 nicht ausreicht, um den Maximalpegelwert im Pufferbehälter in der vorgegebenen Zeit zu erreichen. Anschließend beendet sich die Routine.

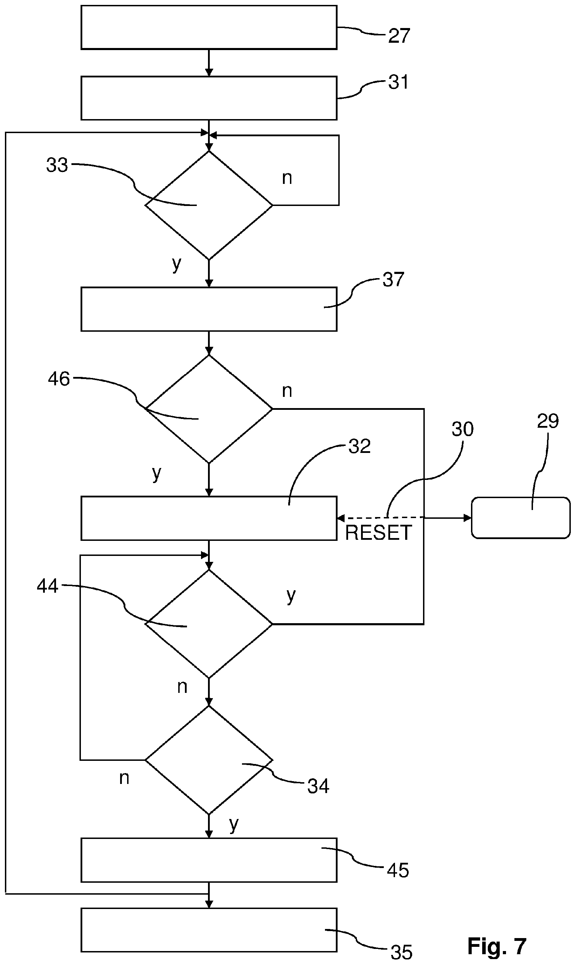

Fig. 7 zeigt ein Verfahren zur Fehlererkennung eines Pumpenschutzes der Umkehrosmoseeinheit 5.

Das Verfahren beginnt mit einer Anforderung zum Füllen 27.

In einem Kaltwasseröffnungsschritt 31 wird das Schaltventil 25 geöffnet. Der Pufferbehälter 7 füllt sich.

In einem Füllstandsabfrageschritt 33 wird geprüft, ob der Minimalpegelwert an der Elektrode 10 erreicht ist ("Min=1").

Ist dies nicht der Fall, Alternative "n", wird gewartet.

Ist dies der Fall, Alternative "y", wird die Pumpe 13 in einem Pumpenstartschritt 37 gestartet. Die Umkehrosmose beginnt. Nun wird in einem Füllstandsabfrageschritt 46 geprüft, ob der Minimalpegelwert wieder unterschritten wird ("Min=0").

Ist dies nicht der Fall, Alternative "n", ist der Wasserzufluss ausreichend, um die Pumpe 13 zu versorgen. Daher wird die Routine in einem Beendigungsschritt 29 beendet, wobei das Zeitmessmittel 17 gestoppt und mit einem Reset 30 zurückgesetzt wird, beispielsweise auf einen voreingestellten Startwert "Timer Ausschaltverzögerung Pumpe" des Rückwärtszählers.

Ist dies der Fall, so wird in einem Zeitmessungsstartschritt 32 das Zeitmessmittel 17 gestartet, beispielsweise durch Starten eines Rückwärtszählers von dem Startwert "Timer Ausschaltverzögerung Pumpe".

Nun wird in einem Füllstandsabfrageschritt 44 geprüft, ob der Minimalpegelwert an der Elektrode 10 wieder erreicht ist ("Min=1").

Ist dies der Fall, Alternative "y", ist der Wasserzufluss ausreichend, um die Pumpe 13 zu versorgen. Daher wird die Routine in einem Beendigungsschritt 29 beendet, wobei das Zeitmessmittel 17 gestoppt und mit einem Reset 30 zurückgesetzt wird, beispielsweise auf einen voreingestellten Startwert "Timer Ausschaltverzögerung Pumpe" des Rückwärtszählers. Es wird somit eine Zeitspanne ab einem Unterschreiten eines Füllstandes bis zum erneuten Erreichen dieses Füllstandes gemessen.

Ist dies nicht der Fall, Alternative "n", so wird in einem Zeitdauerprüfschritt 34 geprüft, ob die voreingestellte Zeitspanne verstrichen ist, beispielsweise dadurch, dass der Rückwärtszähler Null erreicht.

Ist dies nicht der Fall, Alternative "n", so wird das Verfahren bei dem Füllstandsabfrageschritt 44 fortgesetzt.

Ist dies der Fall, Alternative "y", so ist das eingerichtete Fehlererkennungskriterium erfüllt, welches den Start des Befüllvorgangs für den Pufferbehälter 7 und das Unterschreiten eines Minimalpegelwertes mit dem Überschreiten einer vorgegebenen Zeitdauer am Zeitmessmittel 17 verknüpft.

Es wird daher in einem Fehlerausgabeschritt 35 sicherheitshalber in einem Pumpenstoppschritt die Pumpe 13 angehalten, damit sie nicht leer arbeitet, und der Fehler "Wasserzufluss zu gering ausgegeben" ausgegeben, da der Wasserzufluss nicht ausreicht, um die Pumpe 13 dauerhaft zu versorgen. Der Pufferbehälter 7 füllt sich somit erneut, und die Routine wird am Füllstandsabfrageschritt 33 fortgesetzt.

Bei einer Spülmaschine 1 wird somit erfindungsgemäß vorgeschlagen, eine Fehlererkennung für eine Umkehrosmoseeinheit 5 durch Zeitmessungen, die durch Füllstände ausgelöst und/oder gestoppt werden, duchzuführen.

### Bezugszeichenliste

- 1: Spülmaschine
- 2: Kaltwasseranschluss
- 3: Trennstelle
- 4: Freistrecke
- 5: Umkehrosmoseeinheit
- 6: Strömungsweg
- 7: Pufferbehälter
- 8: Füllstandssensor
- 9: Elektrode
- 10: Elektrode
- 11: Elektrode
- 12: Vorfilter
- 13: Pumpe
- 14: Membraneinheit
- 15: Filter
- 16: Drossel
- 17: Zeitmessmittel
- 18: Waschraum
- 19: Boiler
- 20: Zeitmessmittel
- 21: Pumpe
- 22: Ventil
- 23: Filter
- 24: Mengenregler
- 25: Schaltventil
- 26: Steuereinheit
- 27: Anforderung zum Füllen
- 28: Überprüfungsschritt
- 29: Beendigungsschritt
- 30: Reset
- 31: Kaltwasseröffnungsschritt
- 32: Zeitmessungsstartschritt
- 33: Füllstandsabfrageschritt ("Min=1")
- 34: Zeitdauerprüfschritt
- 35: Fehlerausgabeschritt
- 36: Verifikationsschritt
- 37: Pumpenstartschritt
- 38: Kaltwasserstoppschritt
- 39: Füllstandsabfrageschritt ("Max=1")
- 40: Boilerfüllschritt
- 41: Niveauprüfschritt
- 42: ausgeschalteter Zustand
- 43: Einschaltvorgang
- 44: Füllstandsabfrageschritt ("Min=1")
- 45: Pumpenstoppschritt
- 46: Füllstandsabfrageschritt ("Min=0")

## Patentansprüche

1. Spülmaschine (1), insbesondere eine Zweikreis-Spülmaschine, mit einem Kaltwasseranschluss (2) und mit einer dem Kaltwasseranschluss (2) nachgeordneten Trennstelle (3), die ein Hindernis gegen zum Kaltwasseranschluss (2) rückfließendes Wasser bildet, und mit einer Umkehrosmoseeinheit (5), die in einem Strömungsweg (6) der Trennstelle (3) nachgeordnet ist, wobei die Trennstelle (3) mit einem Pufferbehälter (7) verbunden ist und in dem Pufferbehälter (7) wenigstens ein Füllstandssensor (8) angeordnet ist, wobei die Umkehrosmoseeinheit (5) aus dem Pufferbehälter (7) gespeist wird, welcher über die Trennstelle (3) gefüllt wird, **dadurch gekennzeichnet, dass** ein Zeitmessmittel (17) mit dem wenigstens einen Füllstandssensor (8) gekoppelt ist, so dass eine Zeitmessung durch den Füllstandssensor (8) startbar und/oder stoppbar ist.

2. Spülmaschine (1) nach Anspruch 1, **gekennzeichnet durch** einen Waschraum (18) und einen Boiler (19), wobei der Waschraum (18) aus dem Boiler (19) der aus der Umkehrosmoseeinheit (5) gespeist wird, versorgt ist und der Kaltwasseranschluss (2) den Boiler (19) speist.

3. Spülmaschine (1) nach einem der vorangehenden Ansprüche, **dadurch gekennzeichnet, dass** die Trennstelle (3) im Strömungsweg (6) eine Freistrecke (4) aufweist, insbesondere wobei die Freistrecke (4) nach außen offen ausgebildet ist.

4. Spülmaschine (1) nach einem der vorangehenden Ansprüche, **dadurch gekennzeichnet, dass** mit dem wenigstens einen Füllstandssensor (8) das Erreichen wenigstens eines Füllstands, insbesondere wenigstens zweier unterschiedlicher Füllstände nacheinander, detektierbar ist.

5. Spülmaschine (1) nach einem der vorangehenden Ansprüche, **dadurch gekennzeichnet, dass** mit dem wenigstens einen Füllstandssensor (8) ein Überschreiten eines Füllstandes von einem Unterschreiten des Füllstandes unterscheidbar ist.

6. Verfahren zur Fehlerüberwachung einer Umkehrosmoseeinheit (5) einer Spülmaschine (1), insbesondere einer Spülmaschine (1) nach einem der Ansprüche 1 bis 5, mit einem Kaltwasseranschluss (2) und mit einer dem Kaltwasseranschluss (2) nachgeordneten Trennstelle (3), die ein Hindernis gegen zum Kaltwasseranschluss (2) rückfließendes Wasser bildet, und mit einer Umkehrosmoseeinheit (5), die im Strömungsweg (6) der Trennstelle (3) nachgeordnet ist, wobei die Trennstelle (3) einen Pufferbehälter (7) aufweist und wenigstens ein Füllstand des Pufferbehälters (7) überwacht wird, **dadurch gekennzeichnet, dass** ein Fehlererkennungskriterium geprüft wird, in welches eine gemessene Zeit und wenigstens ein Füllstand des Pufferbehälters (7) eingeht, dass eine Zeitmessung gestartet oder gestoppt wird, wenn der Füllstand erreicht ist, und dass ein Ergebnis der Zeitmessung in das hinterlegte Fehlererkennungskriterium eingesetzt wird, wobei ein Fehler ausgegeben wird, wenn das Fehlererkennungskriterium erfüllt ist.

7. Verfahren nach Anspruch 6, **dadurch gekennzeichnet, dass** mit der Zeitmessung eine Zeitspanne zwischen dem Erreichen zweier Füllstände gemessen wird, insbesondere wobei das Fehlererkennungskriterium erfüllt ist, wenn die gemessene Zeitspanne einen Schwellwert überschreitet.

8. Verfahren nach einem der Ansprüche 6 oder 7, **dadurch gekennzeichnet, dass** mit der Zeitmessung eine Zeitspanne nach einem Überschreiten oder Unterschreiten des Füllstandes gemessen wird, insbesondere wobei das Fehlererkennungskriterium erfüllt ist, wenn die gemessene Zeitspanne einen Schwellwert überschreitet, und/oder dass mit der Zeitmessung eine Zeitspanne bis zu einem Überschreiten oder Unterschreiten des Füllstandes gemessen wird, insbesondere wobei die Zeitmessung durch ein weiteres Ereignis, beispielsweise ein Einschalten der Spülmaschine (1) und/oder ein Überschreiten oder Unterschreiten des oder eines weiteren Füllstandes, ausgelöst wird.

9. Verfahren, insbesondere nach einem der Ansprüche 6 bis 8, zur Fehlerüberwachung einer Umkehrosmoseeinheit (5) einer Spülmaschine (1), insbesondere einer Spülmaschine (1) nach einem der Ansprüche 1 bis 5, mit einem Kaltwasseranschluss (2) und mit einer dem Kaltwasseranschluss (2) nachgeordneten Trennstelle (3), die ein Hindernis gegen zum Kaltwasseranschluss (2) rückfließendes Wasser bildet, und mit einer Umkehrosmoseeinheit (5), die im Strömungsweg (6) der Trennstelle (3) nachgeordnet ist, wobei ein Waschraum (18) aus einem Boiler (19) gespeist wird und der Boiler (19) aus der Umkehrosmoseeinheit (5) versorgt wird, wobei wenigstens ein Füllstand des Boilers (19) überwacht wird, wobei der Kaltwasseranschluss (2) geöffnet wird, wenn der Füllstand des Boilers (19) einen Minimalpegelwert unterschreitet, **dadurch gekennzeichnet, dass** ein Fehler der Umkehrosmoseeinheit (5) erkannt wird, wenn bei geöffnetem Kalterwasseranschluss(2) der Füllstand des Boilers (19) einen Maximalpegelwert nicht innerhalb einer vorgegebenen Zeitspanne erreicht.

10. Verfahren nach Anspruch 9, **dadurch gekennzeichnet, dass** der Fehler nur dann ausgegeben wird, wenn kein Fehler des Kaltwasseranschlusses (2) erkannt wurde.

11. Verfahren nach einem der Ansprüche 6 bis 10, **dadurch gekennzeichnet, dass** geprüft wird, ob ein erster niedriger Füllstand nicht erreicht ist und dass ein Fehler erkannt wird, wenn gleichzeitig das Erreichen eines zweiten höherer Füllstandes detektiert wird.

12. Spülmaschine (1) nach einem der Ansprüche 1 bis 5 mit Mitteln zur Ausführung eines Verfahrens nach einem der Ansprüche 6 bis 11.

## Claims

1. Dishwasher (1), in particular a dual-circuit dishwasher, having a cold-water connection (2) and having a separation point (3) which is arranged after the cold-water connection (2) and which forms a barrier against water flowing back to the cold-water connection (2), and having a reverse-osmosis unit (5) which is arranged after the separation point (3) in a flow path (6), wherein the separation point (3) is connected to a buffer container (7) and at least one fill-level sensor (8) is arranged in the buffer container (7), wherein the reverse-osmosis unit (5) is fed from the buffer container (7), which is filled via the separation point (3), **characterized in that** a time-measuring means (17) is coupled to the at least one fill-level sensor (8) such that a time measurement can be started and/or stopped by way of the fill-level sensor (8).

2. Dishwasher (1) according to Claim 1, **characterized by** a washing space (18) and a boiler (19), wherein the washing space (18) is provided with a supply from the boiler (19), which is fed from the reverse-osmosis unit (5), and the cold-water connection (2) feeds the boiler (19).

3. Dishwasher (1) according to either of the preceding claims, **characterized in that** the separation point (3) has a free section (4) in the flow path (6), in particular wherein the free section (4) is formed so as to be outwardly open.

4. Dishwasher (1) according to one of the preceding claims, **characterized in that**, by way of the at least one fill-level sensor (8), the reaching of at least one fill level, in particular at least two different fill levels one after the other, can be detected.

5. Dishwasher (1) according to one of the preceding claims, **characterized in that**, by way of the at least one fill-level sensor (8), an exceedance of a fill level can be distinguished from a falling-below of the fill level.

6. Method for error-monitoring of a reverse-osmosis unit (5) of a dishwasher (1), in particular a dishwasher (1) according to one of Claims 1 to 5, having a cold-water connection (2) and having a separation point (3) which is arranged after the cold-water connection (2) and which forms a barrier against water flowing back to the cold-water connection (2), and having a reverse-osmosis unit (5) which is arranged after the separation point (3) in the flow path (6), wherein the separation point (3) has a buffer container (7) and at least one fill level of the buffer container (7) is monitored, **characterized in that** an error-identification criterion is checked, which error-identification criterion incorporates a measured time and at least one fill level of the buffer container (7), **in that** a time measurement is started or stopped if the fill level has been reached, and **in that** a result of the time measurement is inserted into the stored error-identification criterion, wherein an error is output if the error-identification criterion is satisfied.

7. Method according to Claim 6, **characterized in that**, by way of the time measurement, a period of time between the reaching of two fill levels is measured, in particular wherein the error-identification criterion is satisfied if the measured period of time exceeds a threshold value.

8. Method according to either of Claims 6 and 7, **characterized in that**, by way of the time measurement, a period of time after an exceedance or a falling-below of the fill level is measured, in particular wherein the error-identification criterion is satisfied if the measured period of time exceeds a threshold value, and/or **in that**, by way of the time measurement, a period of time up to an exceedance or a falling-below of the fill level is measured, in particular wherein the time measurement is triggered by a further event, for example a switching-on of the dishwasher (1) and/or an exceedance or a falling-below of the or a further fill level.

9. Method, in particular according to one of Claims 6 to 8, for error-monitoring of a reverse-osmosis unit (5) of a dishwasher (1), in particular a dishwasher (1) according to one of Claims 1 to 5, having a cold-water connection (2) and having a separation point (3) which is arranged after the cold-water connection (2) and which forms a barrier against water flowing back to the cold-water connection (2), and having a reverse-osmosis unit (5) which is arranged after the separation point (3) in the flow path (6), wherein a washing space (18) is fed from a boiler (19) and the boiler (19) is provided with a supply from the reverse-osmosis unit (5), wherein at least one fill level of the boiler (19) is monitored, wherein the cold-water connection (2) is opened if the fill level of the boiler (19) falls below a minimum-level value, **characterized in that** an error of the reverse-osmosis unit (5) is identified if, with the cold-water connection (2) open, the fill level of the boiler (19) does not reach a maximum-level value within a predefined period of time.

10. Method according to Claim 9, **characterized in that** the error is output only if no error of the cold-water connection (2) has been identified.

11. Method according to one of Claims 6 to 10, **characterized in that** it is checked whether a first, low fill level has not been reached, and **in that** an error is identified if, at the same time, the reaching of a second, higher fill level is detected.

12. Dishwasher (1) according to one of Claims 1 to 5, having means for carrying out a method according to one of Claims 6 to 11.

## Revendications

1. Lave-vaisselle (1), en particulier lave-vaisselle à double circuit, avec une prise d'eau froide (2) et avec une interface (3) située en aval de la prise d'eau froide (2) qui fait obstacle au reflux de l'eau vers la prise d'eau froide (2), et avec une unité d'osmose inverse (5) qui est disposée dans une voie d'écoulement (6) en aval de l'interface (3), l'interface (3) étant reliée avec un réservoir tampon (7) et au moins un capteur de niveau (8) étant disposé dans le réservoir tampon (7), l'unité d'osmose inverse (5) étant alimentée par le réservoir tampon (7), lequel est rempli par l'interface (3), **caractérisé en ce qu'**un moyen de chronométrage (17) est accouplé avec au moins un capteur de niveau (8) de sorte qu'un chronométrage peut être lancé et/ou arrêté par le capteur de niveau (8).

2. Lave-vaisselle (1) selon la revendication 1, **caractérisé par** un espace de lavage (18) et une chaudière (19), dans lequel l'espace de lavage (18) est desservi par la chaudière (19) qui est alimentée par l'unité d'osmose inverse (5) et la prise d'eau froide (2) alimente la chaudière (19).

3. Lave-vaisselle (1) selon une des revendications précédentes, **caractérisé en ce que** l'interface (3) présente sur la voie d'écoulement (6) une tubulure (4), cette tubulure (4) étant en particulier ouverte vers l'extérieur.

4. Lave-vaisselle (1) selon une des revendications précédentes, **caractérisé en ce qu'**avec l'au moins un capteur de niveau (8), il est possible de détecter qu'au moins un niveau a été atteint, en particulier qu'au moins deux niveaux différents ont été atteints successivement.

5. Lave-vaisselle (1) selon une des revendications précédentes, **caractérisé en ce qu'**avec l'au moins un capteur de niveau (8), il est possible de distinguer un franchissement d'un niveau vers le haut d'un franchissement de ce niveau vers le bas.

6. Procédé de surveillance d'erreur d'une unité d'osmose inverse (5) d'un lave-vaisselle (1), en particulier d'un lave-vaisselle (1) selon une des revendications 1 à 5, avec une prise d'eau froide (2) et avec une interface (3) située en aval de la prise d'eau froide (2) qui fait obstacle au reflux de l'eau vers la prise d'eau froide (2), et avec une unité d'osmose inverse (5) qui est disposée dans la voie d'écoulement (6) en aval de l'interface (3), selon lequel l'interface (3) comprend un réservoir tampon (7) et au moins un niveau du réservoir tampon (7) est surveillé, **caractérisé en ce qu'**un critère de détection d'erreur dans lequel entrent un temps mesuré et au moins un niveau du réservoir tampon (7) est contrôlé, qu'une mesure de temps est lancée ou arrêtée quand le niveau est atteint et qu'un résultat de la mesure de temps est obtenu dans le critère de détection d'erreur enregistré, une erreur étant émise quand le critère de détection d'erreur est rempli.

7. Procédé selon la revendication 6, **caractérisé en ce qu'**avec le chronométrage est mesuré un laps de temps entre l'atteinte des deux niveaux, selon lequel en particulier le critère de détection d'erreur est rempli quand le laps de temps mesuré excède une valeur seuil.

8. Procédé selon une des revendications 6 ou 7, **caractérisé en ce qu'**avec le chronométrage est mesuré un laps de temps après un franchissement vers le haut ou vers le bas du niveau, selon lequel en particulier le critère de détection d'erreur est rempli quand le laps de temps mesuré excède une valeur seuil et/ou qu'avec le chronométrage est mesuré un laps de temps jusqu'à un franchissement vers le haut ou vers le bas du niveau, selon lequel en particulier le chronométrage est déclenché par un autre événement, par exemple un allumage du lave-vaisselle (1) et/ou un franchissement vers le haut ou vers le bas du ou d'un autre niveau.

9. Procédé, en particulier selon une des revendications 6 à 8, de surveillance d'erreur d'une unité d'osmose inverse (5) d'un lave-vaisselle (1), en particulier d'un lave-vaisselle (1) selon une des revendications 1 à 5, avec une prise d'eau froide (2) et avec une interface (3) située en aval de la prise d'eau froide (2) qui fait obstacle au reflux de l'eau vers la prise d'eau froide (2), et avec une unité d'osmose inverse (5) qui est disposée dans la voie d'écoulement (6) en aval de l'interface (3), selon lequel un espace de lavage (18) est desservi par une chaudière (19) et la chaudière (19) est alimentée par l'unité d'osmose inverse (5), selon lequel au moins un niveau de la chaudière (19) est surveillé et selon lequel la prise d'eau froide (2) est ouverte quand le niveau de la chaudière (19) dépasse une valeur seuil minimale, **caractérisé en ce qu'**une erreur de l'unité d'osmose inverse (5) est détectée quand, avec la prise d'eau froide (2) ouverte, le niveau de la chaudière (19) n'atteint pas une valeur seuil maximale dans un laps de temps prédéfini.

10. Procédé selon la revendication 9, **caractérisé en ce que** l'erreur n'est émise que si aucune erreur de la prise d'eau froide n'est détectée.

11. Procédé selon une des revendications 6 à 10, **caractérisé en ce qu'**il est contrôlé si un premier niveau bas est atteint et qu'une erreur est détectée quand l'atteinte d'un deuxième niveau plus élevé est détectée en même temps.

12. Lave-vaisselle (1) selon une des revendications 1 à 5 avec des moyens pour la mise en œuvre d'un procédé selon une des revendications 6 à 11.
